# EUROPEAN PATENT APPLICATION

(11) **EP 4 621 442 A1**
(43) Date of publication of application: **24.09.2025**
(21) Application number: 25164553.7
(22) Date of filing: 18.03.2025
(51) Int. Cl.: G01S 17/42, G01S 17/86, G01S 17/89, G01S 7/48

(54) **MAPPING APPARATUS WITH INTEGRATED MIXED REALITY FUNCTIONALITY**

(30) Priority: 19.03.2024 GB 202403890
(71) Applicant: NavLive Limited, Oxford, Oxfordshire OX2 6HT (GB)
(72) Inventor: FALLON, Maurice, Abingdon, OX14 3AN (GB); WISTH, David, Cheltenham, GL50 4JU (GB)
(74) Representative: HGF

(57) **Abstract**

Examples disclosed herein provide computer-implemented methods and apparatus of localisation of a portable imaging apparatus in an environment, the method comprising: receiving image data indicative of the environment, the image data captured by the portable imaging apparatus located at a position within the environment; identifying a location of the portable imaging apparatus in the environment by matching an identified object feature in the image data with a corresponding object feature in a prior map of the environment, the prior map linked to a three-dimensional model of the environment; and outputting overlay information of the environment viewed from the identified location of the portable imaging apparatus, the overlay information retrieved from the prior map and indicative of prior stored data relating to a three-dimensional model feature in the three-dimensional model.

## Description

### TECHNICAL FIELD

The present disclosure relates to apparatus localisation, and, in particular, localisation of an imaging apparatus in an environment. Examples relate to an apparatus, computer-implemented methods, and machine-readable media having program code stored thereon configured to perform localisation of an imaging apparatus in an environment.

### BACKGROUND

Examples disclosed here set out apparatus and methods of localising an apparatus in an environment. Localisation is a fundamental capability needed for mobile robots to navigate their environment and make decisions. There have been many studies on vision, light detecting and ranging technology (lidar), and radio detecting and ranging (radar)-based localisation. Many popular localisation methods using visual and lidar sensors have been proposed.

A challenge in the field of apparatus localisation is the determination of an apparatus in real time as the apparatus moves in an environment. Another challenge is ensuring that the information stored about an environment in which an apparatus is located is up to date. This is especially true in indoor environments because these environments can contain more complex structures, resulting in more complex computer imaging data to be processed and maintained to be up-to-date. There is therefore a need in the art to improve localisation technologies, particularly (though not exclusively) in indoor or complex environments.

### SUMMARY

According to an aspect, there is provided a computer-implemented method of localisation of a portable imaging apparatus in an environment, the method comprising: receiving imaging data indicative of the environment, the imaging data captured by the portable imaging apparatus located at a position within the environment; identifying a location of the portable imaging apparatus in the environment by matching an identified object feature in the imaging data with a corresponding object feature in a prior map of the environment, the prior map linked to a three-dimensional model of the environment; and outputting overlay information with a displayed representation of the environment viewed from the identified location of the portable imaging apparatus, the overlay information retrieved from the prior map and indicative of prior stored data relating to a three-dimensional model feature in the three-dimensional model.

The overlay information may be displayed overlaying the three-dimensional model of the environment to form an augmented reality image in some examples. The overlay information may be displayed overlaying the received imaging data indicative of the environment to form an augmented reality image in some examples. The overlay information may be displayed either overlaying the received imaging data or overlaying the three-dimensional model according to a toggle input in some examples, to provide different augmented reality views of the overlay information with respect to a representation of the environment.

The method may comprise identifying a view direction of the portable imaging apparatus in the environment by matching the identified object feature in the imaging data with the corresponding object feature in a prior map of the environment, wherein outputting the overlay information with the displayed representation of the environment comprises outputting the overlay information with the displayed representation of the environment viewed from the identified location of the portable imaging apparatus in the identified view direction.

The prior map may be linked to the three-dimensional model of the environment by matching a plurality of registration features of the prior map with corresponding registration features of the three-dimensional model; and registering the prior map in alignment with the three-dimensional model based on the matched plurality of registration features.

The imaging data may comprise one or more of: Lidar data obtained by a Lidar of the portable imaging apparatus; and visual data obtained by a visual camera of the portable imaging apparatus.

The imaging data may comprise the Lidar data and the visual data; and the identified object feature in the imaging data may be identified from a combination of the Lidar data and the visual data.

The method may comprise: receiving survey imaging data indicative of the environment, the survey imaging data captured by the portable imaging apparatus located within the environment; and creating the prior map of the environment using the survey imaging data.

Creating the prior map of the environment using the survey imaging data may comprise creating a plurality of prior sub-maps using the survey imaging data, the plurality of sub-maps indicative of a respective portion of the environment and when assembled together, form the prior map.

The method may comprise: receiving update survey imaging data indicative of the environment represented by a prior sub-map of the plurality of prior sub-maps; creating an updated prior-sub map using the update survey imaging data; and replacing the corresponding prior sub-map of the plurality of prior sub-maps using the updated prior-sub map.

The method may comprise: matching a plurality of registration features of the updated prior sub-map with corresponding registration features of the corresponding prior sub-map; and registering the updated prior sub-map in alignment with the corresponding prior sub-map based on the matched plurality of registration features prior to replacing the corresponding prior sub-map.

The overlay information may comprise at least one interaction region overlaying a displayed feature in the three-dimensional model. The method may comprise: receiving a user read input to select the interaction region; and in response to the user read input, retrieving stored data relating to the displayed feature from the overlay information and outputting the retrieved stored data.

The overlay information may comprise at least one interaction region overlaying a displayed feature in the three-dimensional model. The method may comprise: receiving a user write input associated with the interaction region, the user write input representative of data to store in relation to the displayed feature; and causing the data to be stored in the overlay information in relation to the displayed feature.

The data to store in relation to the displayed feature in the three-dimensional model may comprise one or more of: an observation associated with the displayed feature; and a measurement associated with the displayed feature and recorded using the portable imaging apparatus at the identified location of the portable imaging apparatus.

Receiving the imaging data indicative of the environment may comprise receiving periodically updated imaging data at an imaging update rate, the imaging data captured by the portable imaging apparatus located at a moving position within the environment. Identifying the location of the portable imaging apparatus in the environment may comprise matching the identified object feature in the imaging data with the corresponding object feature in the prior map of the environment at a matching update rate, wherein the imaging update rate is higher than the matching update rate. Outputting the overlay information with the displayed representation of the environment may comprise outputting the overlay information with the displayed representation of the environment viewed from the identified moving position of the portable imaging apparatus.

The periodically updated imaging data may be updated at a rate of at least ten times per second, e.g. at 10Hz, 20Hz, or 30Hz. The matching update rate may be a rate of less than once per second, e.g. at 0.5Hz or 0.2Hz.

Receiving the imaging data, identifying the location of the portable imaging apparatus, and outputting the overlay information with the displayed representation of the environment viewed from the identified location of the portable imaging apparatus may be performed at the portable imaging apparatus.

Outputting the overlay information of the environment may comprise outputting the overlay information overlaying a corresponding portion of the three-dimensional model or a corresponding portion of the imaging data, to provide an augmented reality image of the environment.

Outputting the overlay information with the displayed representation of the environment may comprise providing output signalling indicative of the overlay information with the displayed representation of the environment viewed from the identified location of the portable imaging apparatus to one or more of: a display screen of the portable imaging apparatus; and a display screen remote from the portable imaging apparatus (such as a heads-up display, a device screen, a smartphone screen, a display of a laptop computer or tablet computer).

The environment may be an indoor environment, such as a building, building site, community building, or covered / roofed space, for example. The environment may be an outdoor environment, such as a park, storage yard or other outdoor space containing features (e.g. fixed features or movable objects such as stock items in a builders' yard), or transport environment, for example.

In an aspect there is provided an apparatus configured to localise a portable imaging apparatus in an environment, the apparatus comprising: an input module configured to receive imaging data indicative of the environment, the imaging data captured by the portable imaging apparatus located at a position within the environment; a matching module configured to identify a location of the portable imaging apparatus in the environment by matching an identified object feature in the imaging data with a corresponding object feature in a prior map of the environment, the prior map linked to a three-dimensional model of the environment; and an output module configured to output overlay information with the displayed representation of the environment viewed from the identified location of the portable imaging apparatus, the overlay information retrieved from the prior map and indicative of prior stored data relating to a three-dimensional model feature in the three-dimensional model.

In an aspect there is provided a portable imaging apparatus, comprising any apparatus disclosed here configured to localise the portable imaging apparatus; and one or more of: a portable Lidar, and the imaging data comprises Lidar data obtained by the portable Lidar; and a visual camera, and the imaging data comprises visual images obtained by the visual camera.

The portable imaging apparatus may comprise a display screen configured to display the overlay information with the displayed representation of the environment viewed from the identified location.

The portable imaging apparatus may further comprise input means configured to receive a user read input, the user read input configured to select an interaction region corresponding to a displayed feature in the three-dimensional model, retrieve stored data relating to the displayed feature from the overlay information and output the retrieved stored data. The portable imaging apparatus may further comprise input means configured to receive a user write input, the user write input associated with the interaction region and representative of data to store in relation to the displayed feature; and to cause the data to be stored in the overlay information in relation to the displayed feature.

In an aspect there is provided a machine-readable medium having program code stored thereon which, when executed by a computer, causes the computer to perform any method disclosed herein.

### BRIEF DESCRIPTION OF THE DRAWINGS

Examples are further described hereinafter with reference to the accompanying drawings, in which:
Figure 1 illustrates a method of localisation of a portable imaging apparatus in an environment according to examples disclosed herein;
Figure 2 illustrates a method of localisation of a portable imaging apparatus in an environment by matching view direction according to examples disclosed herein;
Figure 3 illustrates a method of localisation of a portable imaging apparatus in an environment by sub-mapping according to examples disclosed herein;
Figure 4 illustrates a method of providing data in response to a user read input according to examples disclosed herein;
Figure 5 illustrates a method of storing data in response to a user write input according to examples disclosed herein;
Figure 6 shows an apparatus configured to localise an imaging apparatus in an environment according to examples disclosed herein;
Figure 7 shows a process of localisation of an imaging apparatus in an environment according to examples disclosed herein; and
Figures 8a to 8c show examples of an environment represented by captured visual data and compared to a three-dimensional model of the environment.

### DETAILED DESCRIPTION

Localisation is a fundamental capability in the field of computer vision. Examples disclosed herein aim to improve apparatus localisation and in particular to provide location information in real time, even in environments which can be particularly challenging to navigate within. Examples of such environments include: those in which where the surroundings change over time such as building site for a building being built or renovated; rooms containing movable equipment such as a gym or factory; environments containing a high number of features such as rooms containing furniture (e.g. an office or school room) and having walls, windows and doorways as features. It is a challenge to be able to obtain real time localisation information in such environments, particularly for apparatus which can move within the environment.

Furthermore, it is a challenge to be able to link the information obtained from a localised apparatus to data which is already stored about the environment. For example, linking a computer vision image to a pre-stored record of objects within that environment can be challenging, particularly in real time and particularly in evolving environments where the locations of objects may change or where the environment itself is changing, such as a room being built.

Examples disclosed herein allow for real-time repositioning of a computer vision apparatus and may allow for data flow, either uni-directional or bi-directional, using accurate positioning of a computer image device in real-time. Sensors, for example lidar, and/or vision sensors, may be used on a handheld or otherwise portable device (for example mounted on a vehicle or robot) to determine the location of the device within a prior 3D model (by means of place/feature recognition).

Examples disclosed herein allow for a prior model to be constructed so that the model can evolve and change gradually over time (making it well suited to dynamic facilities and environments such as construction sites). For example, a Lidar unit, as an imaging apparatus, may capture lidar point cloud data from an environment and the Lidar unit may be linked to a positioning apparatus such as an inertial measurement unit (IMU) for the position and pose to be determined at the point of Lidar data capture. In a first phase, the mobile Lidar unit may be moved around an environment to map an accurate 3D model of the environment, which is used to construct the prior map (i.e. a three-dimensional model mapping the environment). This obtained prior map may be linked to or aligned with a site owner's own prior three-dimensional (3D) model (e.g. a building model such as a Building Information Model (BIM), a Computer-Aided Design (CAD) model, a digital twin, or any other computer 3D model representing the environment). Linking the prior map with the 3D model allows for real-time situational awareness or augmented reality. For example, the 3D point cloud may be aligned (registered) to a 3D model, either manually, or by co-locating common reference points, for example. The 3D model is a computerised representation of the environment, and may be a theoretical or planned environment corresponding to a real-world environment. For example the 3D model may be a BIM representative of an architect's model for a building to be build or remodelled. The 3D model may be a plan for a park or other outdoor area to be constructed or remodelled. The 3D model may represent a large structure, such as a sewer, ship, aircraft, bridge, roadway, or any other large object having a 3D computer model representation.

In a second phase, the Lidar unit (or possible another imaging apparatus) may be moved around the environment and capture imaging data, and a place recognition fix may be obtained at times to establish the location of the apparatus within the environment. Using these position fixes, content (overlay information) may be retrieved and presented in relation to the location of the apparatus. For example, augmented reality content may be retrieved in relation to an element which the apparatus has imaged, and the content may be presented to a user. For example, a person may move an imaging apparatus around a building site, select an object visible in a scan from the imaging apparatus, and information about that object may be retrieved from the 3D model by way of matching the location of the imaging apparatus with the location in the prior map which is linked to the 3D model. The determination of the location of the apparatus may be performed quickly through use of an inertial movement apparatus configured to determine the location of the apparatus. The matching of the determined location of the apparatus with a corresponding location in the prior map may be performed less frequently but regularly enough to maintain a real-time location fix of the apparatus with respect to the prior map. The prior map is linked to the 3D model, and so information stored with respect to the 3D model for a feature currently visible to the apparatus (i.e. in the imaging field of view of the apparatus) can then be retrieved and presented to the user while the apparatus is as the corresponding location in the real world environment. The retrieved information may be, for example, the time when that element was located in the environment, the materials from which the element is made, the supplier of the element, or other information.

The overlay information may be displayed overlaying the 3D model of the environment to form an augmented reality image in some examples. The overlay information may be displayed overlaying the received imaging data indicative of the environment to form an augmented reality image in some examples. The overlay information may be displayed either overlaying the received imaging data or overlaying the 3D model according to a toggle input in some examples, to provide different augmented reality views of the overlay information with respect to a representation of the environment. The overlay information may not necessarily be displayed in an augmented reality way, and may, for example, be displayed in a side panel, pop-up window, or other portion of a display from a displayed representation of the environment in some examples, but the overlay information relates to displayed features in the representation of the environment.

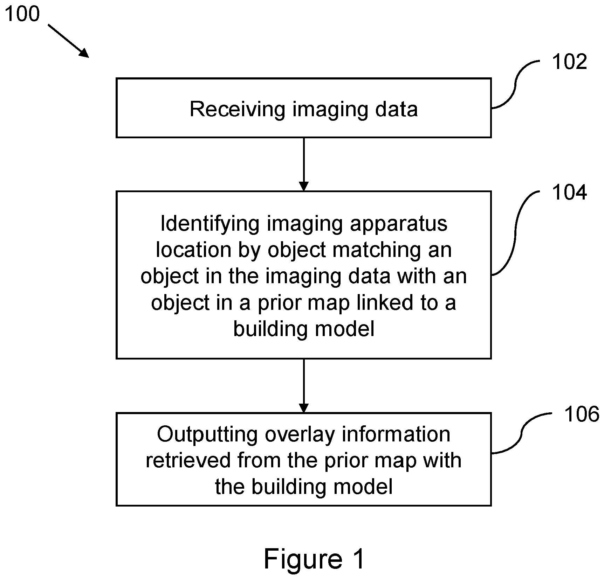

Figure 1 illustrates a method 100 of localisation of a portable imaging apparatus in an environment. The method is a computer-implemented method, and may be performed in some examples on a processor of a portable imaging device in some examples. In step 102, the method 100 comprises receiving imaging data indicative of the environment. The imaging data is captured by the portable imaging apparatus located at a position within the environment. For example, the portable imaging apparatus may be a portable Lidar and the imaging data may be Lidar data captured from the environment, for example as a point cloud or a lidar scan. As another example, the portable imaging apparatus may be a portable visual image capture device (e.g. a camera or plural cameras) and the imaging data may be visual data captured from the environment. In some examples a combination of different imaging data, e.g. Lidar and visual, may be captured, and in some examples may be captured simultaneously. Thus, the imaging data may comprise Lidar data obtained by a Lidar of the portable imaging apparatus and/or visual data obtained by a visual camera of the portable imaging apparatus. In other examples, other types of imaging may be used, for example radar, or infra-red imaging.

In a step 104, the method 100 comprises identifying a location of the portable imaging apparatus in the environment by matching an identified object feature in the imaging data with a corresponding object feature in a prior map of the environment. It will be appreciated that more than one identified object feature in the imaging data may be matched with corresponding object features in the prior map of the environment in some examples. The prior map is a prior-captured representation of the environment, for example recorded as part of an earlier survey of the environment. For example, an object recognition algorithm may determine that an arch feature is present in the imaging data and can be identified as corresponding to the equivalent corresponding archway in the prior map data. Thus the location in the captured imaging data where the archway is located can be matched to the corresponding location in the prior map based on recognition of the same archway in the prior map. The prior map is linked to a 3D model of the environment, so the imaged archway can also therefore be identified in the 3D model through matching the archway location in the imaging data with the archway in the prior map data and the prior map is linked (e.g. aligned with) the 3D model.

An identified object feature may be an object itself, such as the archway, or may be a unique-appearance feature in the imaging data such as a corner or edge in the environment which can be distinguished from other features, either uniquely (e.g. the only corner pointing to the left in the image) or with reference to another feature (e.g. the only corner above a window rather than another corner which is not above a window).

In a step 106, the method 100 comprises outputting overlay information with a displayed representation of the environment viewed from the identified location of the portable imaging apparatus. The overlay information is retrieved from the prior map and is indicative of prior stored data relating to a 3D model feature in the 3D model. In the archway example above, the overlay information may indicate a material from which the archway is constructed, the identity of the person or building company that constructed or installed the archway, the date of construction of the archway, the cost of materials and labour involved in construction of the archway, or other information. The overlay information may be displayed with the 3D model in some examples, so that the archway in the 3D model can be seen with the associated overlay information. Overlay information need not necessarily be displayed "overlaying" an image of the corresponding feature and may, for example, be displayed in one portion of a display screen, or a different display screen, to the portion of the display screen or the display screen which is displaying the feature in the 3D model. Displaying the overlay information may be performed in some examples by displaying some information as if it is overlaying the image of the corresponding feature in the 3D model, for example as an outline of the feature and/or an annotation label showing the overlay information. In some examples, the overlay information may be displayed overlaying the 3D model of the environment, or overlaying the captured image of the environment, to form an augmented reality image.

The prior map may be linked to the 3D model of the environment by matching a plurality of registration features of the prior map with corresponding registration features of the 3D model. For example, if the position of at least three features can be determined in the prior map and those features can be matched with the corresponding equivalent features in the building map, the prior map can be registered to the 3D model (by "registered" it is meant that the position, orientation, and scale of the prior map can be adjusted to be the same as that of the 3D model so that the prior model and the building map may be overlaid). By knowing the position of three (or more) features, a triangulation may be performed to register the prior map with the 3D model based on feature positions.

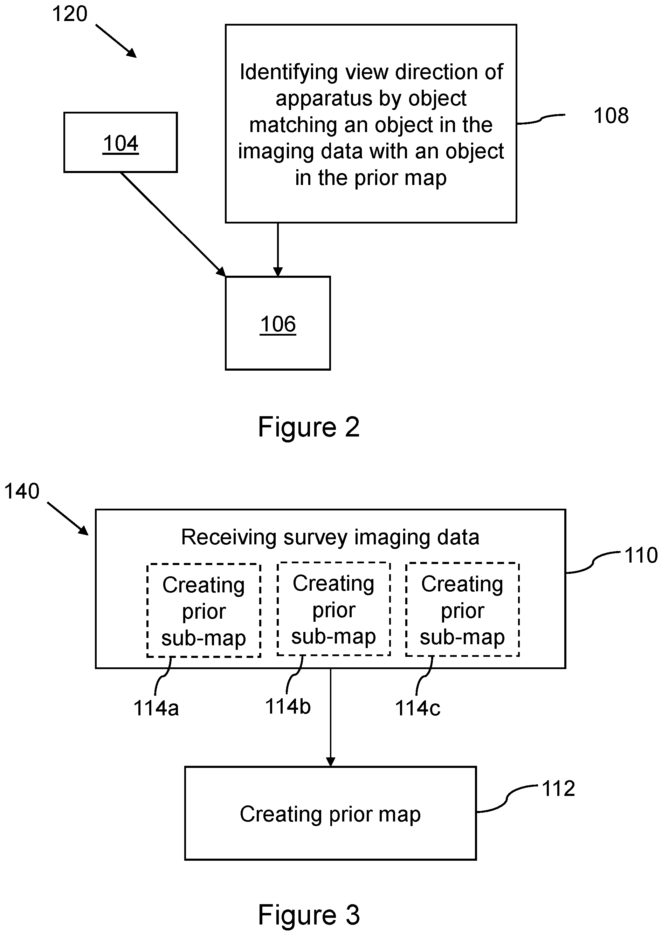

Figure 2 illustrates a method of localisation of a portable imaging apparatus in an environment 120 by matching view direction as well as matching an identified object feature location in the imaging data with a corresponding object feature location in the prior map of the environment 104. This method 120 adds an additional identification step 108 to the method of Figure 1. The method 120 comprises identifying a view direction of the portable imaging apparatus in the environment 108 by matching the identified object feature in the imaging data with the corresponding object feature in a prior map of the environment. In this example, outputting the overlay information with the displayed representation of the environment 106 comprises outputting the overlay information with the displayed representation of the environment viewed from the identified location of the portable imaging apparatus in the identified view direction. In this way, not only is the object matching performed by matching an instance of a feature in the imaging data with the corresponding feature instance in the 3D model, but the view direction is also matched (e.g. a double window frame is oriented to the left of the viewer (imaging apparatus) in the imaging data, so this is matched with the double window frame in the 3D model also being oriented to the left of the viewer (imaging apparatus) by way of matching with the corresponding double window frame in the prior map linked to the 3D model.

In some examples, if the position and direction of at least one feature in the prior map can be matched to the position and direction of the equivalent feature in the 3D model then the prior map may be registered with the 3D model. Knowing the direction of the features as well with respect to the viewer / imaging apparatus as the locations of the features provides additional information which means fewer features overall may need to be matched between the prior map and the 3D model. The prior map can then be registered in alignment with the 3D model based on the matched registration features position and direction.

In some examples, if the position, direction and scale of at least one feature in the prior map can be matched to the position, direction and scale of the equivalent feature in the 3D model then the prior map can be registered with the 3D model. It will be appreciated that matching more than the minimum required features or feature parameters (e.g. position, direction, and scale) may be advantageous to act as a check that the registration of the prior map and the 3D model is correct and accurate. Other possible feature parameters include feature orientation (e.g. the front, side, or back of a chair can be identified) and feature colour if visual imaging data is obtained (e.g. two pillars may be present, one against a blue wall covering and another against a grey wall, allowing them to be distinguished from each other). It will also be appreciated that beyond a threshold measure of correspondence between features and feature parameters in the prior map and the 3D model there is negligible gain in confidence in the accuracy of registration.

As mentioned, the imaging data may comprise Lidar data obtained by a Lidar of the portable imaging apparatus, and/or visual data obtained by a visual camera of the portable imaging apparatus. The imaging data may comprise the Lidar data and the visual data, and the identified object feature in the imaging data may be identified from a combination of the Lidar data and the visual data. In this way, similarly to registering both the position and orientation of a feature to act as a check that the feature matching between the prior map and the 3D model is correct, registering both the visual data and the Lidar data acts as a check that the feature is correctly identified and matched to the correct equivalent feature in the 3D model. For example, visual data may provide information on the colour or texture of a feature, whereas the Lidar data of the same feature may provide complementary information about the position of the feature, i.e. the distance from the imaging apparatus to the feature.

Receiving the imaging data indicative of the environment in step 102 may comprise receiving periodically updated imaging data at an "imaging update rate". The periodically updated imaging data may be updated at a rate of at least ten times per second in some examples, e.g. at 10Hz, 20Hz, or 30Hz. The imaging data may be periodically updated while being captured by the portable imaging apparatus located at a moving position within the environment. That is, as the portable imaging apparatus moves through the environment, the imaging data can be captured as the apparatus is moving, similar to a video camera filming a scene while moving (e.g. being carried by a moving camera operator, moving on a rail in the environment), providing real time or near real time imaging of the environment.

Identifying the location of the portable imaging apparatus in the environment in step 104 may comprise matching the identified object feature in the imaging data with the corresponding object feature in the prior map of the environment at a "matching update rate". The matching update rate may be a rate of less than once per second, e.g. at 0.5Hz or 0.2Hz. The imaging update rate (e.g. 10Hz or more) may be higher than the matching update rate (e.g. 0.5 Hz). In this way, the imaging data can be rapidly obtained as the apparatus moved in the environment, but the matching process may take place at a (sometimes much) lower rate, thereby allowing the overall localisation method to be performed in real time or near real time, as the more computationally intensive process of feature matching is performed less often than the imaging data is updated through image capture. Furthermore, this method may be performed on a processor of the mobile device because sufficient processing power may be present in a portable device, rather than requiring a higher processing power which could be present in a more powerful server or non-portable computer processing system.

The environment may be an indoor environment, such as a building, building site, community building, or covered / roofed space, for example. The environment may be an outdoor environment, such as a park, storage yard or other outdoor space containing features (e.g. fixed features or movable objects such as stock items in a builders' yard), or transport environment, for example. The method (and apparatus performing the method) may advantageously be performed in such a site to obtain additional information about the environment and the elements within that environment in real time by obtaining and being presented with the 3D model and overlay information for the environment at the current location of the imaging apparatus. Thus a user may, for example, move around an environment and be presented in real time with additional information about the real world site. One may envisage a building site manager being able to usefully obtain information about the elements such as pillars, windows, doorways, wall coatings, and other structural elements from the 3D model and from the overlay information corresponding to the building site in front of the user at that moment, such as date and time of installation, operator who performed the installation, name of element manufacturer, costs, comparison to a planned timetable for construction, or other information. Being able to operate the whole method on the portable imaging apparatus is advantageous for operating in an environment where connection to an external computer processor may be difficult, such as a building site or underground environment where there is limited or no wireless communication possible.

Outputting the overlay information with the displayed representation of the environment in step 106 may comprise outputting the overlay information with the displayed representation of the environment viewed from the identified moving position of the portable imaging apparatus. In this way the observer of the outputted 3D model or captured imaging data, is presented with an intuitive view of the environment including the overlay information. In examples where the imaging apparatus is a portable or handheld apparatus comprising a display screen, the user can advantageously observe the 3D model and overlay information on the display screen which corresponds to the scene of the visible real world environment in front of, or surrounding, them. For example, in a building site environment, the user can obtain 3D model and overlay information for the building site in which they are located to advantageously provide supplementary information regarding their current surroundings, as a useful aid for building site surveying and management.

Thus, in some examples, receiving the imaging data 102, identifying the location of the portable imaging apparatus 104, and outputting the overlay information with the displayed representation of the environment viewed from the identified location of the portable imaging apparatus 106 may be performed at the portable imaging apparatus.

Also, it can be appreciated that outputting the overlay information with the displayed representation of the environment 106 may comprise providing output signalling indicative of the overlay information with the displayed representation of the environment viewed from the identified location of the portable imaging apparatus to a display screen of the portable imaging apparatus. Outputting the overlay information with the displayed representation of the environment 106 may comprise providing output signalling indicative of the overlay information with the displayed representation of the environment viewed from the identified location of the portable imaging apparatus to a display screen remote from the portable imaging apparatus (such as a heads-up display, a device screen, a smartphone screen, a display of a laptop computer or tablet computer).

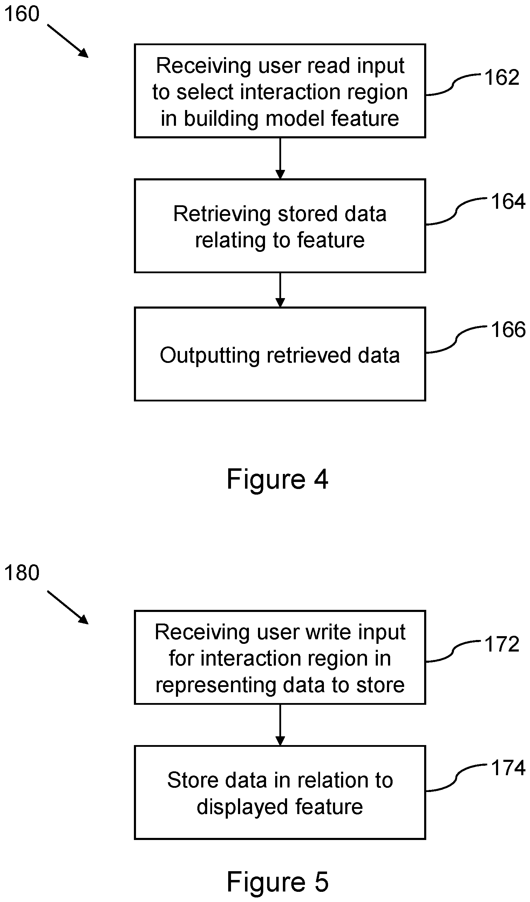

An example of an apparatus and method performed on such an apparatus is of a device comprising a Lidar imaging apparatus (e.g. a commercial off-the-shelf, COTS, unit) with an inertial measurement unit (IMU) for location and pose/orientation determination. In a first phase, the hand-portable device can be hand carried around a facility/environment, and a highly accurate 3D model of the facility may be mapped out as a Lidar point cloud. This point cloud data forms the prior map. The 3D prior (point cloud) map is then aligned ('registered') to a 3D model, either manually or by co-locating known common reference points as discussed above. In a second phase, the device can again be carried around the facility, and occasionally (i.e. at a lower frequency than the rate of image capture) a place recognition fix (using the lidar or a visual map) can be established to a location within the prior map by matching an identified feature with a corresponding feature in the prior map. With that position fix, additional content such as augmented reality content can be presented to the user which connects the present scene to the 3D model and/or the captured visual representation of the environment. As explained in more detail with reference to Figures 4 and 5, data may be presented and recorded in a bi-directional manner, so as well as being presented with data stored about the present environment the user may be able to record their own data from their present location and that data may be stored and linked to the corresponding location in the 3D model as new or updated overlay or additional data.

Figure 3 illustrates a method of forming a prior map of an environment by sub-mapping 140. The prior map may cover a large area (e.g. a multi-storey building) and require a large amount of computer memory to store the data and images relating to the prior map. It may therefore be advantageous to be able to update the prior map of the area by updating a portion of the map in which the environment has changed and not change portions of the map in which the environment has not changed. This may be achieved by creating the prior map by imaging a series of sub-maps which fit together to provide an overall full map, the prior map, of the environment.

The method 140 comprises receiving survey imaging data 110 indicative of the environment. The survey imaging data is captured by the portable imaging apparatus located within the environment. The method then comprises creating the prior map of the environment using the survey imaging data 112. The survey imaging data 110 may comprise, as shown, a plurality of sub-maps 114a-c which fit together to overall provide the prior map. Thus, creating the prior map of the environment using the survey imaging data 110 may comprise creating a plurality of prior sub-maps 114a-c using the survey imaging data. The plurality of sub-maps 114a-c are indicative of a respective portion of the environment and, when assembled together, form the prior map.

Once the prior map has been captured, if there is a change in a sub-map of the overall prior map, rather than re-surveying the whole environment, only the location in which there has been a change can be re-imaged and the corresponding sub-map can be replaced by the updated sub-map using the re-imaged data. Thus, the method may comprise receiving update survey imaging data indicative of the environment represented by a prior sub-map 114a-c of the plurality of prior sub-maps; creating an updated prior-sub map using the update survey imaging data; and replacing the corresponding prior sub-map of the plurality of prior sub-maps 114a-c using the updated prior-sub map.

To replace a prior sub-map with an updated sub-map, the method 140 may comprise matching a plurality of registration features of the updated prior sub-map with corresponding registration features of the corresponding prior sub-map, and registering the updated prior sub-map in alignment with the corresponding prior sub-map based on the matched plurality of registration features prior to replacing the corresponding prior sub-map. This is similar to the registration of the imaging data of the environment with the prior model described in relation to Figures 1 and 2 in order to match the imaging data with the prior map and thus the 3D model to be able to match up features which are currently visible in the environment (at the time of image capture) with the corresponding features in the 3D model.

Examples disclosed herein also allow for bi-directional data flow, allowing a user to obtain additional information about the environment from the 3D model, and/or write new data to the 3D model.

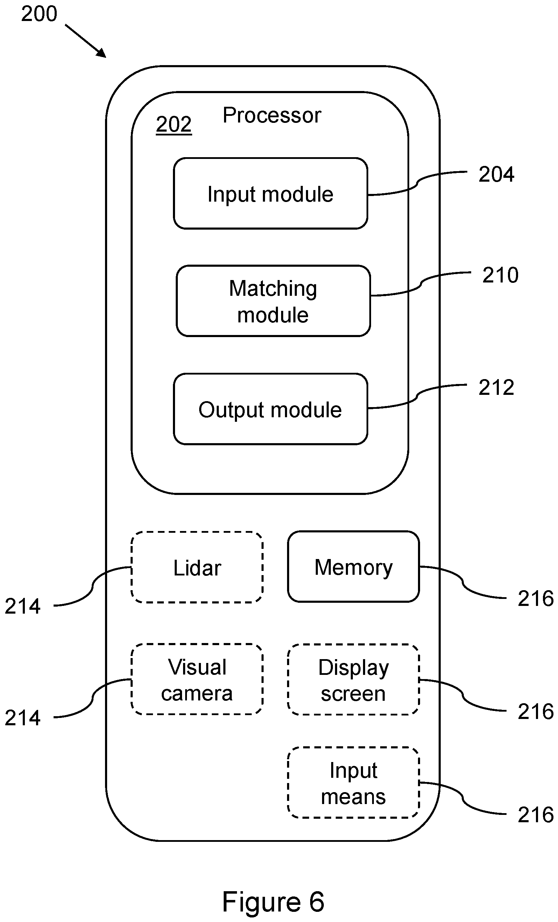

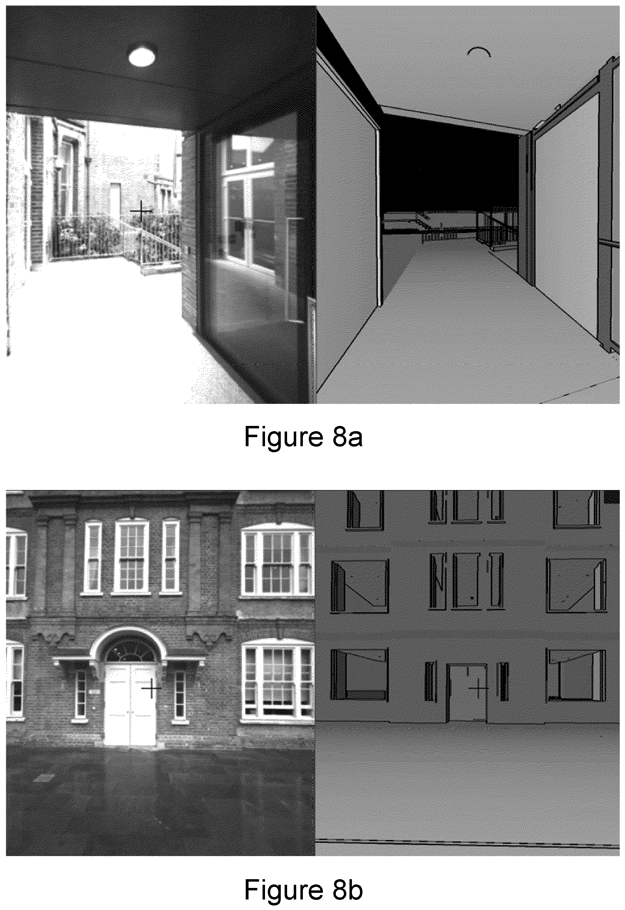

Figure 4 illustrates a method of providing data in response to a user read input 160. When overlay information is provided, this may provide some additional information regarding what is visible, such as manufacturer's information about an installed object, or the date and time of installation of an object. In some examples the overlay information may comprise at least one interaction region overlaying a displayed feature in the 3D model. In such examples, the method 160, as shown in Figure 4, may comprise receiving a user read input 162 to select the interaction region. An interaction region may be determined, in the example of a user holding a handheld surveying device 200 such as that of Figure 6, by the user physically holding the device 200 and pointing the device at the region/object of interest in reality, or by the user touching a touch screen displaying the current view on the location of a feature, which is then recognised as an interaction region as there is information about the touched feature which can be presented. As an example, considering Figure 8b, the user could point the device (and in some examples make a selection input, e.g. press a button) at the white door (Figure 8b, left, as indicated by the crosshair in the image on one side of the door). Then the apparatus 200 would be able to identify the corresponding feature in the 3D model (shown as the blue rectangle in Figure 8b with the crosshair in the corresponding location). The door in the image occupies an interaction region. Then, useful information can be displayed about the door by querying databases storing data about the door, such as the manufacturer of the door, a model number, a supplier, who fitted it, what date it was fitted, was the fitter paid, has the task been confirmed as complete, etc. As another example, for an image of an aeroplane, the identified information of a selected part (selected similarly to the door in the above example) could be when it was last serviced, where to look for a particular part, a picture of the last service, etc. As another example, for an image of a forest, the information could be a digital model of each tree, tree species, tree measurements, a log of flora and fauna previously observed living in the tree, etc. Other examples may be envisaged.

For example, the 3D model and interaction region may be displayed on a touch display screen and a user may be able to touch the highlighted interaction region to select the corresponding feature. In response to the user read input, the method 160 comprises retrieving stored data relating to the displayed feature from the overlay information 164 and outputting the retrieved stored data 166. In some examples, the interaction region may be predefined by manual assignment of an interaction region to a displayed element. In some examples, the interaction region may be automatically assigned based on computer vision object recognition, and/or by automatic recognition of an element for which additional data exists (for example, if an element can be automatically recognised as a distinct object but no additional information is stored for that object, no interaction region may be assigned to that object).

In this way, the displayed 3D model may initially show some areas of highlighting, shading, or other visual emphasis or indication relating to element in the image for which there is additional information which can be displayed. By selecting a highlighted feature by way of interacting with the interaction region, the user can be presented with additional overlay information about the selected feature. It will be appreciated there are different ways in which the interaction region may be displayed, and selected by a user (e.g. touch on a touch screen, point and click using a mouse, toggle around plural overlay information regions using a toggle input device), in order for retrieved data to be presented (e.g. displayed on the screen displaying the 3D model, displayed on a different screen, provided as audio output via a speaker, or otherwise).

Figure 5 illustrates a method of storing data in response to a user write input. As well as being able to retrieve additional information about a feature in a 3D model as imaged by the imaging apparatus, it may be advantageous to be able to write information to the 3D model. For example, an inspector may survey a site by moving around the site and recording images of the site. On reaching an element in the site for which additional information is to be recorded (for example, recording a health and safety hazard in a school or factory, or recording a commentary on a location for installation of a new item in the site such as a sculpture in a park or a new store front in a shopping centre, or recording a measurement of an element in the environment, possibly as determined from the captured imaging data). Such an "inspector" may be a human or may in some examples be a mobile robot. Examples such as that shown in Figure 5 allow for information to be recorded in relation to a 3D model from images captured in real time from the environment.

In user write input examples, the overlay information may comprise at least one interaction region overlaying a displayed feature in the 3D model. The method 180 comprises receiving a user write input associated with the interaction region 172. The user write input is representative of data to store in relation to the displayed feature. The method 180 then comprises causing the data to be stored in the overlay information 174 in relation to the displayed feature. The data to store in relation to the displayed feature in the 3D model may comprise an observation associated with the displayed feature. The data to store in relation to the displayed feature in the 3D model may comprise a measurement associated with the displayed feature and recorded using the portable imaging apparatus at the identified location of the portable imaging apparatus.

Thus, a user may be able to select an interaction region relating to a feature in a 3D model, and select it to cause data to be written to the overlap information for that feature. For example, a user may touch a region of a floor which is shown in the captured images of the environment and which requires a new floor covering to be installed. Selecting the portion of the image showing the floor causes information to be stored in the 3D model for the same floor portion. For example, touching the region may cause a pop-up to be displayed in which the user can add an annotation to say "floor to be re-covered". If the system is operating in a "maintenance" mode, for example, a user may select the region requiring maintenance and a maintenance flag may be stored on the system (without necessarily adding any description or additional input other than the selection) for a maintenance engineer to be notified and attend the site to perform the noted maintenance. Another example is that a user write input may be made with respect to an object, and the imaging data may be used to determine a size of the selected object (e.g. the height of a door frame from the floor level, or the length of a cable along a wall) and that dimension may be recorded in the 3D model along with the date and time of recording. A key feature is that information can be written to the 3D model based on images captured from the real world environment.

Figure 6 shows an apparatus configured to localise an imaging apparatus in an environment. For example the apparatus 200 may perform any of the methods disclosed in relation to Figures 1 to 5. The apparatus 200 comprises a processor 202 and memory 216. The processor 202 in this example comprises an input module 204, matching module 210 and output module 212. The apparatus 200 as shown is configured to localise a portable imaging apparatus in an environment, and comprises the input module 204 configured to receive imaging data indicative of the environment, the imaging data captured by the portable imaging apparatus located at a position within the environment; a matching module 210 configured to identify a location of the portable imaging apparatus in the environment by matching an identified object feature in the imaging data with a corresponding object feature in a prior map of the environment, the prior map linked to a 3D model of the environment; and an output module 212 configured to output overlay information with the displayed representation of the environment viewed from the identified location of the portable imaging apparatus, the overlay information retrieved from the prior map and indicative of prior stored data relating to a 3D model feature in the 3D model.

The apparatus 200 in Figure 6 may also comprise other elements such that it provides a portable imaging apparatus 200. Such a portable imaging apparatus 200 as shown comprises any apparatus which is configured to localise the portable imaging apparatus as discussed above; and one or more of: a portable Lidar 214 (and the imaging data comprises Lidar data obtained by the portable Lidar) and a visual camera 214 (and the imaging data comprises visual images obtained by the visual camera). In some examples, as shown, the portable imaging apparatus 200 may comprise a display screen 216 configured to display the overlay information with the displayed representation of the environment viewed from the identified location.

The portable imaging apparatus 200 may further comprise input means 216. The input means 216 may be configured to receive a user read input, wherein the user read input is configured to select an interaction region corresponding to a displayed feature in the 3D model, retrieve stored data relating to the displayed feature from the overlay information and output the retrieved stored data, as discussed above in relation to Figure 4. The portable imaging apparatus 200 may comprise input means 216 which is configured to receive a user write input, wherein the user write input is associated with the interaction region and representative of data to store in relation to the displayed feature; and cause the data to be stored in the overlay information in relation to the displayed feature, as discussed above in relation to Figure 5.

Also covered by this disclosure is a machine-readable medium having program code stored thereon which, when executed by a computer, causes the computer to perform any method disclosed herein. For example, the memory 216 of the apparatus 200 may contain code to perform any computer-implemented method disclosed herein. In some examples, the memory (or other machine-readable medium) may be located remote from the imaging apparatus and in communication (e.g. over a wireless connection such as Bluetooth, mobile network, wireless LAN, or via a cloud, or via a wired connection). However, in some scenarios, such as an underground location or a location without wireless network access, having a memory remote from the imaging apparatus may be impractical so in some examples the apparatus may comprise the imaging apparatus, memory, and processor, all together and in communication within the apparatus without needing remote communication access to another computing device. The memory may be a non-transient computer-readable medium. The memory may comprise flash memory.

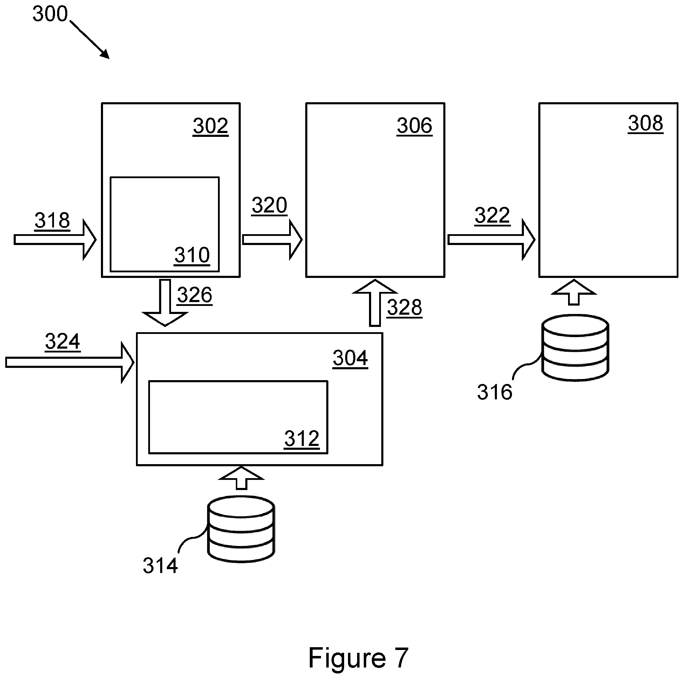

Figure 7 shows an overall example process 300 of localisation of an imaging apparatus in an environment. In this example, Lidar data is captured as imaging data, as well as motion data of the Lidar imaging apparatus. The prior map is stored in the map database 314. The 3D model is stored in the 3D model storage 316.

In stage 302, motion tracking is performed as the imaging apparatus is moved around in the environment. Raw imaging data (e.g. Lidar data) and motion data (e.g. from an IMU) are input 318 to the motion tracking module 302. Part of the motion tracking 302 process is to perform some calibration of the input data 318, in a calibration step 310, so that it may be used for location recognition. Such calibration 310 may comprise scan correction, local mapping, and/or gravity alignment.

In stage 304, place recognition is performed as the images obtained from raw image data (e.g. Lidar data) are processed and compared with the stored prior map of the environment from the prior map database 314. The place recognition process 304 may comprise matching steps 312 such as obtaining an image description, matching input data 304 with data in the database 314, local registration of the input data 302 with the data in the database 314, and consistency checking.

The high frequency motion tracking feed 326 from the motion tracking module 302 is provided to the place recognition module 304 as a high frequency input (e.g. 10Hz, 20Hz, 30Hz or higher) in order to track the motion of the imaging apparatus in the environment. The motion tracking process 326 can be performed quickly, so that input data 318, 324 can be processed quickly to determine the location of the imaging apparatus in real time or near real time.

It can be more computationally intensive to match a captured image with a prior map image 328 than determining the position and motion of the imaging apparatus 326. While motion tracking 326 can be quickly performed, matching the determined location with the prior map database ("map matching" 328) can take place at a much lower frequency, such as 1Hz, 0.5Hz, or less for example, and still allow, overall, the motion of the apparatus to be matched to the prior map image at a real time or near real time rate.

At stage 306, a "transform bridge" step is performed where the output 320 from the motion tracking module 302 and the output 328 from the place recognition module 304 are received and combined. The output 322 from the transform bridge module 306 provides information on where the apparatus is located in the environment at the high frequency of motion tracking obtained in the motion tracking 302. From this stage 306, an output is provided which comprises high frequency and low latency map tracking 322 by way of the rapid motion tracking 302 and less frequent map matching 304. This output 322 may then be provided as output, for example an augmented reality visualisation of the environment 308 by presenting the output 322 with the corresponding 3D model image from the 3D model storage 316.

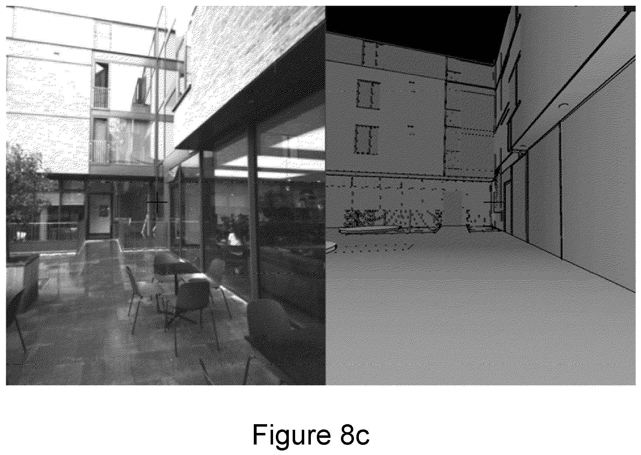

Figures 8a to 8c show examples of an environment represented by captured visual data and the 3D model of the environment at that location . In each example it can be seen that the captured imaging data (in this example, comprising visual data) on the left of each of Figures 8a-c matches well the corresponding 3D model shown on the right of each Figure. Figure 8a shows how a match is identified in an environment having angled walls and a corridor structure. Figure 8b shows how a match is identified in an environment having building details such as windows and a doorway. Figure 8c shows how a match is identified in an outdoor built environment having multiple storeys in height. In the 3D models on the right of these Figures 8a-c, overlay information obtained from the prior map (e.g. stored in the prior map storage 314) may be provided with the 3D model (e.g. retrieved from the 3D model storage 316 of Figure 7) to give the user information about their environment as captured in the imaging data shown on the left of Figures 8a-c.

The term "registration feature" is used in this description to mean features matched between the prior map and the 3D model, and to mean features matched between sub-maps of the prior map e.g. when updating a sub map of the prior map. The term "object feature" is used in this description to mean features matched between the imaging data (e.g. the visual data and/or the lidar data) with a corresponding prior map. It will be appreciated that the "registration features" may pertain to objects in the prior map and 3D model and so may be called "object features". It will be appreciated that the "object features" may pertain to objects in the imaging data and the prior map which are used for registration of the imaging data with the prior map data, and so may be called "registration features".

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example of a generic series of equivalent or similar features. Many modifications and other examples set out herein will come to mind to a person skilled in the art in light of the teachings presented herein. Therefore, it will be understood that the disclosure herein is not to be limited to the specific examples disclosed herein. Moreover, although the description provided herein provides examples in the context of certain combinations of elements, steps and/or functions may be provided by alternative examples without departing from the scope of the appended claims.

## Claims

1. A computer-implemented method of localisation of a portable imaging apparatus in an environment, the method comprising:
receiving imaging data indicative of the environment, the imaging data captured by the portable imaging apparatus located at a position within the environment;
identifying a location of the portable imaging apparatus in the environment by matching an identified object feature in the imaging data with a corresponding object feature in a prior map of the environment, the prior map linked to a three-dimensional model of the environment; and
outputting overlay information with a displayed representation of the environment viewed from the identified location of the portable imaging apparatus, the overlay information retrieved from the prior map and indicative of prior stored data relating to a three-dimensional model feature in the three-dimensional model;
optionally, wherein the environment is an indoor environment.

2. The computer-implemented method of claim 1, wherein the method comprises:
identifying a view direction of the portable imaging apparatus in the environment by matching the identified object feature in the imaging data with the corresponding object feature in a prior map of the environment, and
wherein outputting the overlay information with the displayed representation of the environment comprises outputting the overlay information with the displayed representation of the environment viewed from the identified location of the portable imaging apparatus in the identified view direction.

3. The computer-implemented method of any preceding claim, wherein the prior map is linked to the three-dimensional model of the environment by:
matching a plurality of registration features of the prior map with corresponding registration features of the three-dimensional model; and
registering the prior map in alignment with the three-dimensional model based on the matched plurality of registration features.

4. The computer-implemented method of any preceding claim, wherein the imaging data comprises one or more of:
Lidar data obtained by a Lidar of the portable imaging apparatus; and
visual data obtained by a visual camera of the portable imaging apparatus;
optionally, wherein:
the imaging data comprises the Lidar data and the visual data; and
the identified object feature in the imaging data is identified from a combination of the Lidar data and the visual data.

5. The computer-implemented method of any preceding claim, wherein the method comprises:
receiving survey imaging data indicative of the environment, the survey imaging data captured by the portable imaging apparatus located within the environment; and
creating the prior map of the environment using the survey imaging data.

6. The computer-implemented method of any preceding claim, wherein creating the prior map of the environment using the survey imaging data comprises:
creating a plurality of prior sub-maps using the survey imaging data, the plurality of sub-maps indicative of a respective portion of the environment and when assembled together, form the prior map.

7. The computer-implemented method of claim 6, wherein the method comprises:
receiving update survey imaging data indicative of the environment represented by a prior sub-map of the plurality of prior sub-maps;
creating an updated prior-sub map using the update survey imaging data; and
replacing the corresponding prior sub-map of the plurality of prior sub-maps using the updated prior-sub map;
optionally, wherein the method comprises:
matching a plurality of registration features of the updated prior sub-map with corresponding registration features of the corresponding prior sub-map; and
registering the updated prior sub-map in alignment with the corresponding prior sub-map based on the matched plurality of registration features prior to replacing the corresponding prior sub-map.

8. The computer-implemented method of any preceding claim, wherein the overlay information comprises at least one interaction region overlaying a displayed feature in the three-dimensional model, and wherein the method comprises one or more of:
receiving a user read input to select the interaction region; and in response to the user read input, retrieving stored data relating to the displayed feature from the overlay information and outputting the retrieved stored data; and
receiving a user write input associated with the interaction region, the user write input representative of data to store in relation to the displayed feature; and causing the data to be stored in the overlay information in relation to the displayed feature.

9. The computer-implemented method of claim 8, wherein the method comprises receiving the user write input representative of data to store in relation to the displayed feature, wherein the data to store comprises one or more of:
an observation associated with the displayed feature; and
a measurement associated with the displayed feature and recorded using the portable imaging apparatus at the identified location of the portable imaging apparatus.

10. The computer-implemented method of any preceding claim, wherein:
receiving the imaging data indicative of the environment comprises receiving periodically updated imaging data at an imaging update rate, the imaging data captured by the portable imaging apparatus located at a moving position within the environment;
identifying the location of the portable imaging apparatus in the environment comprises matching the identified object feature in the imaging data with the corresponding object feature in the prior map of the environment at a matching update rate, wherein the imaging update rate is higher than the matching update rate; and
outputting the overlay information with the displayed representation of the environment comprises outputting the overlay information with the displayed representation of the environment viewed from the identified moving position of the portable imaging apparatus.

11. The computer-implemented method of any preceding claim, wherein receiving the imaging data, identifying the location of the portable imaging apparatus, and outputting the overlay information with the displayed representation of the environment viewed from the identified location of the portable imaging apparatus are performed at the portable imaging apparatus.

12. The computer-implemented method of any preceding claim, wherein one or more of:
outputting the overlay information with the displayed representation of the environment viewed from the identified location of the portable imaging apparatus comprises outputting the overlay information overlaying a corresponding portion of the three-dimensional model or a corresponding portion of the imaging data, to provide an augmented reality image of the environment; and
outputting the overlay information with the displayed representation of the environment comprises providing output signalling indicative of the overlay information with the displayed representation of the environment viewed from the identified location of the portable imaging apparatus to one or more of: a display screen of the portable imaging apparatus; and a display screen remote from the portable imaging apparatus.

13. An apparatus configured to localise a portable imaging apparatus in an environment, the apparatus comprising:
an input module configured to receive imaging data indicative of the environment, the imaging data captured by the portable imaging apparatus located at a position within the environment;
a matching module configured to identify a location of the portable imaging apparatus in the environment by matching an identified object feature in the imaging data with a corresponding object feature in a prior map of the environment, the prior map linked to a three-dimensional model of the environment; and
an output module configured to output overlay information with the displayed representation of the environment viewed from the identified location of the portable imaging apparatus, the overlay information retrieved from the prior map and indicative of prior stored data relating to a three-dimensional model feature in the three-dimensional model.

14. A portable imaging apparatus, comprising:
the apparatus according to claim 13; and one or more of:
a portable Lidar, and the imaging data comprises Lidar data obtained by the portable Lidar; and
a visual camera, and the imaging data comprises visual images obtained by the visual camera;
optionally, comprising a display screen configured to display the overlay information with the displayed representation of the environment viewed from the identified location;
further optionally, comprising input means configured to receive one of more of:
a user read input, the user read input configured to select an interaction region corresponding to a displayed feature in the three-dimensional model, retrieve stored data relating to the displayed feature from the overlay information and output the retrieved stored data; and
a user write input, the user write input associated with the interaction region and representative of data to store in relation to the displayed feature; and to cause the data to be stored in the overlay information in relation to the displayed feature.

15. A machine-readable medium having program code stored thereon which, when executed by a computer, causes the computer to perform any of the methods of claims 1 to 12.
